# EUROPÄISCHE PATENTANMELDUNG

(11) **EP 2 187 186 A1**
(43) Veröffentlichungstag der Anmeldung: **19.05.2010**
(21) Anmeldenummer: 08169294.9
(22) Anmeldetag: 17.11.2008
(51) Int. Cl.: G01F 23/288, G01N 9/00, G01T 1/24

(54) **Radiometrische Füllstands- oder Dichtemessung**

(71) Anmelder: VEGA Grieshaber KG, 77709 Wolfach (DE)
(72) Erfinder: Gruhler, Holger, 78609, Tuningen (DE); Rauer, Winfried, 77716, Fischerbach (DE)
(74) Vertreter: Schäflein, Christian Georg

(57) **Zusammenfassung**

Gemäß einem Ausführungsbeispiel der Erfindung wird der Füllstand oder die Dichte eines Mediums in einem Tank radiometrisch gemessen, indem die von einer radioaktiven Quelle erzeugte Strahlung, nachdem sie den Behälter durchstrahlt hat, zumindest teilweise direkt in ein elektrisches Signal umgewandelt wird. Aus diesem elektrischen Signal wird, ggf. nach einer Digitalisierung, der entsprechende Prozesswert ermittelt.

## Beschreibung

### Gebiet der Erfindung

Die Erfindung betrifft radiometrische Messungen von Füllständen oder Dichten eines Mediums. Insbesondere betrifft die Erfindung ein radiometrisches Messsystem zur Bestimmung eines Füllstands oder einer Dichte eines Mediums in einem Behälter, ein Verfahren zur radiometrischen Bestimmung eines Füllstands oder einer Dichte eines Mediums in einem Behälter, ein Programmelement sowie ein computerlesbares Medium.

### Technologischer Hintergrund

In heutigen radiometrischen Messsystemen werden sog. Photomultiplier verwendet, die die von einem Szintillator erzeugten Lichtblitze detektieren und in ein elektrisches Signal umwandeln. Solche Photomultiplier benötigen eine aufwändige Spannungserzeugung. Außerdem ist der Platzbedarf relativ groß.

### Zusammenfassung der Erfindung

Es ist eine Aufgabe der Erfindung, ein verbessertes radiometrisches Messsystem für die Füllstandmessung, für die Grenzstandmessung, für die Dichtemessung oder für die Dursatzmessung an Förderbändern bzw. Förderschnecken zu schaffen.

Es sind ein radiometrisches Messsystem zur Bestimmung eines Füllstands oder einer Dichte eines Mediums in einem Behälter, ein Verfahren, ein Programmelement und ein computerlesbares Medium gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen das Messsystem, das Verfahren, das Programmelement und das computerlesbare Medium. In anderen Worten lassen sich die Merkmale, die im Folgenden im Hinblick auf das Messsystem beschrieben werden, auch in dem Verfahren, dem Programmelement und dem computerlesbaren Medium implementieren, und umgekehrt.

Gemäß einem Ausführungsbeispiel der Erfindung ist ein radiometrisches Messsystem zur Bestimmung eines Füllstands und/oder einer Dichte eines Mediums in einem Behälter angegeben, welches eine Strahlungsquelle und einen Detektor sowie eine Auswerteeinheit aufweist. Die Strahlungsquelle ist zum Erzeugen ionisierender Strahlung ausgeführt, die den Behälter durchstrahlt. Der Detektor ist zum Umwandeln dieser ionisierenden Strahlung ausgeführt, nachdem sie den Behälter (und damit im Allgemeinen auch das Medium) durchlaufen hat. Hierbei muss nicht sämtliche ionisierende Strahlung umgewandelt werden, sondern es genügt, wenn zumindest ein Teil dieser Strahlung umgewandelt wird. Die Umwandlung erfolgt direkt in ein elektrisches Signal.

Unter "direkt" ist zu verstehen, dass der Detektor ein Bauelement aufweist, welches die ionisierende Strahlung (bzw. einen Teil davon) aufnimmt und ohne Zwischenschritte in das elektrische Signal umwandelt. Insbesondere ist kein Szintillator vorgesehen, der aus der Strahlung zuerst Lichtblitze erzeugt, die daraufhin von dem Photomultiplier in ein elektrisches Signal umgewandelt werden.

Die Auswerteeinheit ist zur Bestimmung eines Prozesswerts, der mit dem Füllstand oder der Dichte des Mediums korrespondiert, ausgeführt. Die Bestimmung erfolgt auf Basis des elektrischen Signals von dem Detektor.

Der Vorteil der Verwendung eines Halbleiterdetektors liegt unter anderem in der verhältnismäßig kompakten Bauform, verbunden mit Kosteneinsparungen am Bauteil selbst, an der Ansteuerelektronik und am umgebenden Gehäuse, das entsprechend kleiner ausfallen kann.

Der Prozesswert wird nachfolgend beispielsweise über eine 4...20mA Stromschleife an ein Empfangsgerät übermittelt. Auch kann die Übermittlung kabellos erfolgen.

Unter dem zumindest teilweise Umwandeln der ionisierenden Strahlung ist zu verstehen, dass nicht sämtliche Strahlung, die von der radioaktiven Quelle ausgesendet wird und den Tank durchläuft, umgewandelt werden muss. Es genügt, wenn lediglich ein Bruchteil dieser Strahlung umgewandelt wird.

Gemäß einem weiteren Ausführungsbeispiel der Erfindung ist der Detektor ein Halbleiterdetektor und weist beispielsweise zumindest eine Photodiode auf, diese kann z.B. eine PIN-Diode sein. Ein Vorteil der Verwendung von Photodioden liegt darin, dass sie klein sind, preiswert herzustellen sind sowie einfach anzusteuern sind. Die Kombination mehrerer Photodioden erlaubt es, die Empfindlichkeit des Systems und dessen Auflösung zu erhöhen.

Gemäß einem weiteren Ausführungsbeispiel der Erfindung weist das Messsystem eine Vielzahl an Photodioden auf, die als Array angeordnet sind.

Gemäß einem weiteren Ausführungsbeispiel der Erfindung weist das Messsystem einen Komparator auf, der dem Umwandeln des elektrischen Signals in ein digitales Signal dient.

Gemäß einem weiteren Ausführungsbeispiel der Erfindung ist das Messsystem zum Umwandeln weiterer ionisierender Strahlung nach Durchgang der Strahlung durch den Behälter in weitere elektrische Signale ausgeführt, wobei die Auswerteeinheit zum Zählen der resultierenden digitalen Signale aus dem Komparator oder zum direkten Zählen der resultierenden elektrischen Signale aus dem Detektor (ggf. nach entsprechender Verstärkung) ausgeführt ist.

Aus dem Ergebnis dieser Zählung kann dann die Dichte des Mediums oder der Füllstand im Behälter bestimmt werden.

Gemäß einem weiteren Ausführungsbeispiel der Erfindung ist ein Verfahren zur radiometrischen Bestimmung eines Füllstands oder einer Dichte eines Mediums in einem Behälter angegeben, bei dem ionisierende Strahlung, die den Behälter durchstrahlt, erzeugt wird. Daraufhin findet ein zumindest teilweises direktes Umwandeln der ionisierenden Strahlung nach Durchgang der Strahlung durch den Behälter in ein elektrisches Signal statt. Daraufhin erfolgt eine Bestimmung eines Prozesswerts, der mit dem Füllstand oder der Dichte des Mediums in dem Behälter korrespondiert, auf Basis des erzeugten elektrischen Signals (bzw. der erzeugten elektrischen Signale).

Vor der Bestimmung des Prozesswerts kann das elektrische Signal in ein entsprechendes digitales Signal umgewandelt werden.

Gemäß einem weiteren Ausführungsbeispiel der Erfindung wird weitere ionisierende Strahlung nach Durchgang der Strahlung durch den Behälter in weitere elektrische Signale umgewandelt, wobei die resultierenden digitalen Signale oder die resultierenden elektrischen Signale gezählt werden.

Gemäß einem weiteren Ausführungsbeispiel der Erfindung ist ein Programmelement angegeben, das, wenn es auf einem Prozessor ausgeführt wird, den Prozessor anleitet, einen Prozesswert zu bestimmen, der mit einem Füllstand oder einer Dichte eines Mediums in einem Behälter korrespondiert. Die Bestimmung erfolgt auf Basis eines elektrischen Signals, wobei das elektrische Signal durch zumindest teilweises direktes Umwandeln von ionisierender Strahlung nach Durchgang der Strahlung durch den Behälter erzeugt ist.

Dabei kann das Programmelement z. B. Teil einer Software sein, die auf dem Prozessor gespeichert ist. Der Prozessor kann dabei ebenso Gegenstand der Erfindung sein. Weiterhin umfasst dieses Ausführungsbeispiel der Erfindung ein Programmelement, welches schon von Anfang an die Erfindung verwendet, sowie auch ein Programmelement, welches durch eine Aktualisierung (Update) ein bestehendes Programm zur Verwendung der Erfindung veranlasst.

Gemäß einem weiteren Ausführungsbeispiel der Erfindung ist ein computerlesbares Medium angegeben, auf dem ein Programmelement gespeichert ist, das, wenn es auf einem Prozessor ausgeführt wird, den Prozessor anleitet, die oben angegebenen Schritte durchzuführen.

Ein Kernaspekt der Erfindung ist es, dass ein kostengünstiges radiometrisches Messsystem zur Messung einer Prozessvariablen wie Dichte oder Füllstand bereitgestellt wird. Die Messung der ionisierenden Strahlung erfolgt nicht mittels eines Photomultipliers.

Im Folgenden werden mit Verweis auf die Figuren Ausführungsbeispiele der Erfindung beschrieben.

### Kurze Beschreibung der Figuren

Fig. 1 zeigt eine Darstellung eines Messsystems gemäß einem Ausführungsbeispiel der Erfindung.
Fig. 2 zeigt eine Darstellung eines Messsystems gemäß einem weiteren Ausführungsbeispiel der Erfindung.
Fig. 3 zeigt eine Darstellung eines Messsystems gemäß einem weiteren Ausführungsbeispiel der Erfindung.
Fig. 4 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

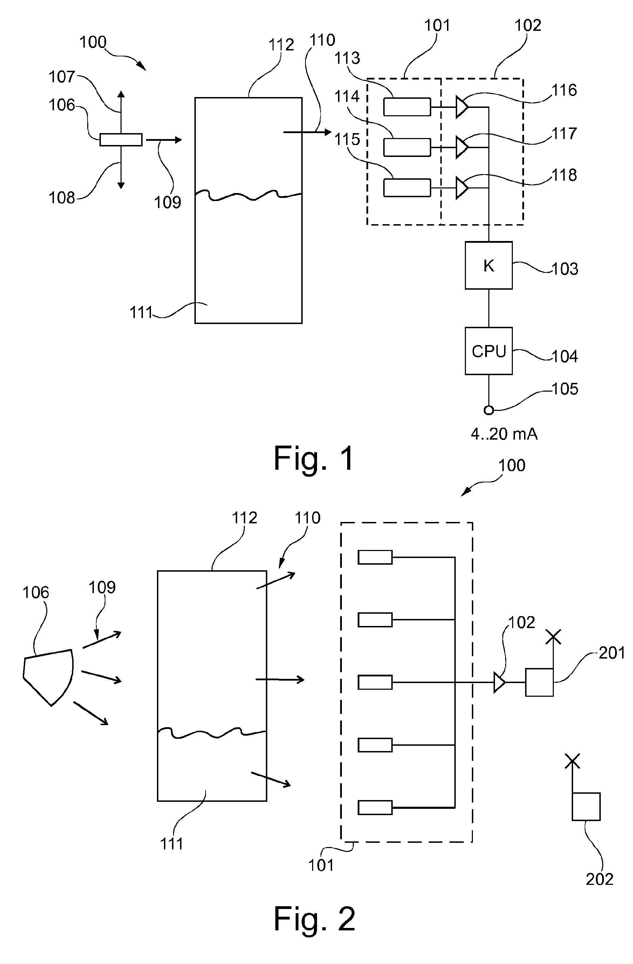

Fig. 1 zeigt eine Darstellung eines Messsystems 100 gemäß einem Ausführungsbeispiel der Erfindung. Das Messsystem 100 weist eine radioaktive Strahlungsquelle 106 sowie einen Detektor 101, 102 mit entsprechender Auswerteelektronik 103, 104 sowie eine Schnittstelle 105 zum Anschluss an einen Datenbusoder ein Kommunikationsgerät auf.

Bei der radioaktiven Quelle 106 handelt es sich beispielsweise um einen Gammastrahler oder einen Betastrahler. Prinzipiell könnte es sich bei der radioaktiven Quelle 106 auch um einen Alphastrahler handeln, je nachdem, um was für ein Füllgut und was für einen Behälter es sich handelt.

Die von der radioaktiven Quelle 106 erzeugte radioaktive bzw. ionisierende Strahlung 109 wird in Richtung des Behälters oder Tanks 112 ausgestrahlt. Der Behälter 112 enthält das Füllgut 111, beispielsweise in Form einer Flüssigkeit, eines Feststoffes oder eines Gases.

Je nach Füllstand oder Dichte des Füllguts 111 wird die ionisierende Strahlung 109 beim Durchlaufen des Behälters 112 mehr oder weniger stark absorbiert. Die auf der anderen Seite des Behälters heraustretende (Rest) Strahlung 110 trifft dann zumindest teilweise auf eines der Detektorelemente 113, 114, 115.

Die Strahlungsquelle 106 kann beispielsweise gerichtete, fokussierte ionisierende Strahlung aussenden und über einen entsprechenden Antrieb vertikal in die Richtung 107 herauf- bzw. in die Richtung 108 herabbewegt werden. Ein solcher Antrieb ist aber nur in bestimmten Anwendungsfällen nötig.

Der Detektor 101, 102 kann ein Array aus Einzeldetektoren 113, 114, 115 aufweisen. Alternativ kann der Detektor auch nur ein einzelnes Detektorelement aufweisen und ggf. ebenfalls herauf- und herabbewegt werden. Einzelne Detektorelemente können unter anderem für Dichtemessungen und Grenzstandmessungen verwendet werden. Dies ermöglicht es, ein einfaches und kleines Gerät aufzubauen. Die Bauform der Halbleiterdetektoren ist wesentlich kleiner als die der Szintillatoren und Photomultipliern. Zusammen mit der einfacheren elektrischen Ansteuerung ergibt die erfindungsgemäße Ausführung eine deutliche Kosteneinsparung gegenüber dem Stand der Technik.

Jeder der Einzeldetektoren 113, 114, 115 ist an einem entsprechenden Verstärker 116, 117, 118 angeschlossen, der das entsprechende erzeugte elektrische Signal verstärkt. Auch ist es möglich (siehe Fig. 2), dass nur ein einziger Verstärker 102 vorgesehen ist, an dem alle einzelnen Detektorelemente angeschlossen sind. Bei den Verstärkern handelt es sich um Spannungsverstärker, die auf eine schnelle Impulsantwort optimiert sind.

Das verstärkte elektrische Signal wird dann einem Komparator 103 zugeführt, der die von den Detektorelementen erzeugten Spannungssignale oder Spannungspulse digitalisiert. Die digitalen Signale werden dann von dem Prozessor 104 aufsummiert und in einen entsprechenden Prozesswert umgerechnet, der dann an die Schnittstelle 105 übergeben wird.

Die Detektorelemente 113, 114, 115 können in Form von Halbleitersensoren ausgeführt sein, die eine direkte Messung der radioaktiven Strahlung ermöglichen. Die Ansteuerelektronik und die Auswertung der resultierenden Signale ist wesentlich einfacher als im Falle einer Szintillator-Photomultiplieranordnung.

Die Signale aus den Detektorelementen 113, 114, 115 können kodiert sein, so dass der Prozessor bei der nachfolgenden Signalauswertung immer weiß, von welchem Detektorelement er gerade ein Signal erhalten hat.

Fig. 2 zeigt ein weiteres Ausführungsbeispiel eines Messsystems 100, bei dem nicht ein gerichteter radioaktiver Strahler 106 (wie in Fig. 1), sondern eine Strahlungsquelle 106 verwendet wird, die in mehrere Richtungen ausstrahlt und somit einen Großteil des Behälters 112 durchstrahlt.

Wie in Fig. 2 zu sehen, kann beispielsweise der Verstärkerausgang des Verstärkers 102 oder (falls eine Digitalisierung stattfindet) der Komparator 103, oder aber auch der Prozessor 104 (siehe Fig. 1) an eine Kommunikationseinheit 201 angeschlossen sein. Die Kommunikationseinheit 201 überträgt den Prozesswert an eine Auswerteeinheit 202 in Form einer drahtlosen Datenübertragung.

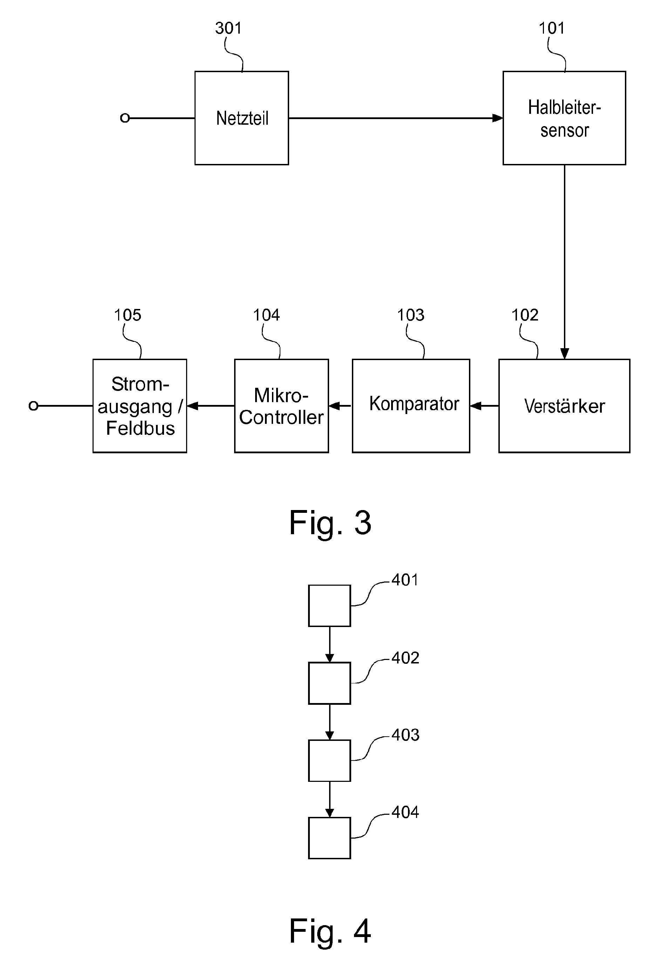

Fig. 3 zeigt ein Messsystem gemäß einem weiteren Ausführungsbeispiel der Erfindung. Das Messsystem ist als Füllstand- und Dichte-Messsystem einsetzbar. Der radiometrische Sensor bzw. Detektor besteht aus einem Netzteil 301, einem Prozessor oder Mikrocontroller 104, einem Halbleitersensor 101 zur Detektion der radioaktiven Strahlung, einem Signalverstärker 102, einem oder mehreren Komparatoren 103 sowie einem Stromausgang bzw. einer Feldbusschnittstelle 105.

Der Halbleitersensor 101 wandelt die radioaktive Strahlung in elektrische Pulse um. Der anschließende Signalverstärker verstärkt die elektrischen Pulse und Komparatoren wandeln die Pulse in digitale Pulse um, die vom Prozessor gezählt werden. Abhängig vom Prozesswert ändert sich das radioaktive Feld und damit die Pulsrate. Der Prozessor bestimmt aus der Pulsrate den physikalischen Prozesswert.

Fig. 4 zeigt ein Flussdiagramm eines Verfahrens, bei dem in Schritt 401 ionisierende Strahlung erzeugt wird und einen Behälter durchstrahlt. In Schritt 402 wird die Strahlung zumindest teilweise direkt in ein elektrisches Signal umgewandelt. In Schritt 403 erfolgt eine Digitalisierung des entsprechenden Spannungspulses und in Schritt 404 wird der Prozesswert bestimmt, in dem sämtliche erzeugte Spannungspulse ausgewertet bzw. gezählt werden.

Ergänzend ist darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Radiometrisches Messsystem zur Bestimmung eines Füllstands oder einer Dichte eines Mediums in einem Behälter, das Messsystem (100) aufweisend:
eine Strahlungsquelle (106) zum Erzeugen ionisierender Strahlung, die den Behälter durchstrahlt;
einen Detektor (101, 102) zum zumindest teilweisen direkten Umwandeln der ionisierenden Strahlung nach Durchgang der Strahlung durch den Behälter in ein elektrisches Signal;
eine Auswerteeinheit (104) zur Bestimmung eines Prozesswertes, der mit dem Füllstand oder der Dichte des Mediums korrespondiert, auf Basis des elektrischen Signals.

2. Messsystem nach Anspruch 1,
wobei der Detektor (101, 102) ein Halbleiterdetektor ist.

3. Messsystem nach Anspruch 2, wobei der Detektor (101, 102) eine Photodiode aufweist.

4. Messsystem nach einem der vorhergehenden Ansprüche,
wobei das Messsystem eine Vielzahl an Photodioden aufweist, die als Array angeordnet sind.

5. Messsystem nach einem der vorhergehenden Ansprüche, weiterhin aufweisend:
einen Komparator (103) zum Umwandeln des elektrischen Signals in ein digitales Signal.

6. Messsystem nach einem der vorhergehenden Ansprüche, ausgeführt zum Umwandeln weiterer ionisierender Strahlung nach Durchgang der Strahlung durch den Behälter in weitere elektrische Signale;
wobei die Auswerteeinheit (104) zum Zählen der resultierenden digitalen Signale aus dem Komparator oder der elektrischen Signale ausgeführt ist.

7. Verfahren zur radiometrischen Bestimmung eines Füllstands oder einer Dichte eines Mediums in einem Behälter, das Verfahren aufweisend die Schritte:
Erzeugen ionisierender Strahlung, die den Behälter durchstrahlt;
zumindest teilweises direktes Umwandeln der ionisierenden Strahlung nach Durchgang der Strahlung durch den Behälter in ein elektrisches Signal;
Bestimmen eines Prozesswertes, der mit dem Füllstand oder der Dichte des Mediums korrespondiert, auf Basis des elektrischen Signals.

8. Verfahren nach Anspruch 7, weiterhin aufweisend den Schritt:
Umwandeln des elektrischen Signals in ein digitales Signal.

9. Verfahren nach Anspruch 7 oder 8, weiterhin aufweisend die Schritte:
Umwandeln weiterer ionisierenden Strahlung nach Durchgang der Strahlung durch den Behälter in weitere elektrische Signale;
Zählen der resultierenden digitalen Signale oder der elektrischen Signale.

10. Programmelement, das, wenn es auf einem Prozessor ausgeführt wird, den Prozessor anleitet, die folgenden Schritte durchzuführen:
Bestimmen eines Prozesswertes, der mit einem Füllstand oder einer Dichte eines Mediums in einem Behälter korrespondiert, auf Basis eines elektrischen Signals;
wobei das elektrische Signal durch zumindest teilweises direktes Umwandeln von ionisierender Strahlung nach Durchgang der Strahlung durch den Behälter erzeugt ist.

11. Computerlesbares Medium, auf dem ein Programmelement gespeichert ist, das, wenn es auf einem Prozessor ausgeführt wird, den Prozessor anleitet, die folgenden Schritte durchzuführen:
Bestimmen eines Prozesswertes, der mit einem Füllstand oder einer Dichte eines Mediums in einem Behälter korrespondiert, auf Basis eines elektrischen Signals;
wobei das elektrische Signal durch zumindest teilweises direktes Umwandeln von ionisierender Strahlung nach Durchgang der Strahlung durch den Behälter erzeugt ist.
